# EUROPÄISCHE PATENTSCHRIFT

(11) **EP 1 877 241 B1**
(45) Veröffentlichungstag und Bekanntmachung des Hinweises auf die Patenterteilung: **29.04.2009**
(21) Anmeldenummer: 06707160.5
(22) Anmeldetag: 22.02.2006
(51) Int. Cl.: B29C 73/16

(54) **VORRICHTUNG ZUM ABDICHTEN UND AUFPUMPEN AUFBLASBARER GEGENSTÄNDE**
DEVICE FOR SEALING AND INFLATING INFLATABLE OBJECTS
DISPOSITIF POUR ETANCHEIFIER ET GONFLER DES OBJETS GONFLABLES

(30) Priorität: 28.04.2005 DE 102005019770
(43) Veröffentlichungstag der Anmeldung: 16.01.2008
(73) Patentinhaber: Continental Aktiengesellschaft, D-30165 Hannover (DE)
(72) Erfinder: DETERING, Rainer, 30926 Seelze (DE); GERLACH, Markus, 31073 Grünenplan (DE); RUBBA, Heiko, 31303 Burgdorf (DE)
(74) Vertreter: Finger, Karsten
(86) Internationale Anmeldenummer: PCT/EP2006/001594
(87) Internationale Veröffentlichungsnummer: WO 2006/114148

(56) Entgegenhaltungen:
- EP-A- 1 493 550
- WO-A-20/05023527
- DE-A1- 19 846 451

## Beschreibung

Die Erfindung betrifft eine Vorrichtung zum Abdichten und Aufpumpen aufblasbarer Gegenstände, insbesondere zum Abdichten und Aufpumpen von Kraftfahrzeugreifen, wobei die Vorrichtung eine Druckgasquelle, einen Behälter für ein in den aufblasbaren Gegenstand einfiillbares selbsttätiges Dichtmittel, eine Ventil- und Verteilereinheit für Dichtmittel und Druckgas mit einer an die Druckgasquelle anschließbaren Einlaßleitung und einer an den Aufblasbaren Gegenstand anschließbaren Auslaßleitung, Verbindungsmittel zwischen Ventil- und Verteilereinheit und aufblasbarem Gegenstand, ggf. Verbindungsmittel zur Energiezufuhr sowie Schalt-, und/oder Steuer- und Anzeigeeinrichtungen für den Betrieb der Vorrichtung beinhaltet, wobei der Dichtmittelbehälter mit der Ventil- und Verteilereinheit lösbar verbunden ist und der Dichtmittelbehälter und die Ventil- und Verteilereinheit mit Arretiermitteln versehen sind, welche ein unbeabsichtigtes Lösen des Dichtmittelbehälters von der Ventil- und Verteilereinheit verhindern.

Abseits der Gattung offenbart hierzu die US 4,982,876 einen Verschluß einer Flasche für aromatisierenden Sirup in einem Spenderapparat für kohlensäurehaltige Getränke. Der zweiteilige Verschluß beinhaltet einen Deckelaufsatz, der mit einer axialen Bewegung auf ein auf der Flasche befindliches Adapter-Unterteil geschoben wird. Der Deckelaufsatz weist einen Ring mit über den Umfang verteilten Zähnen oder rastenartigen Vorsprüngen auf, die beim Aufschieben einen vorspringenden Bund des Adapter-Unterteils hintergreifen. Aufgrund der geometrischen Auslegung der Zähne und des Bundes läßt sich danach der Deckelaufsatz nicht mehr abziehen, ohne dass vorher der den Bund haltende Ring des Adapter-Unterteils entfernt wird. Das Lösen einer solchen Verbindung ist daher relativ umständlich.

Eine gattungsgemäße Vorrichtung zum Abdichten von Reifen ist beispielsweise aus der DE 198 46 451 A1 bekannt. Dabei wird der Dichtmittelbehälter auf dem Kopf stehend auf eine Ventil- und Verteilereinheit aufgeschraubt, hier Entnahmeeinheit genannt. Durch das Aufschrauben des Dichtmittelbehälters auf die Entnahmeeinheit ist zunächst eine sichere Verbindung gewährleistet, wobei jedoch die Gefahr besteht, dass der Benutzer der Vorrichtung den Dichtmittelbehälter von der Entnahmeeinheit löst, während der Kompressor läuft oder unmittelbar nachdem dieser abgeschaltet worden ist. Der Dichtmittelbehälter steht dann nämlich noch unter Druck und kann in ungünstigen Fällen von der Entnahmeeinheit unkontrolliert getrennt werden. Eine Sicherung oder Arretierung ist nicht offenbart.

Die WO 2005/023527 A1 offenbart eine gattungsbildende Vorrichtung zum Abdichten aufblasbarer Gegenstände, mit einer Gasdruckquelle, einem Dichtmittelbehälter und einer Entnahmeeinheit mit zugehörigen Ein- und Auslassleitungen, bei der erste und zweite Arretiermittel so vorgesehen sind, dass der Dichtmittelbehälter durch die Arretiermittel an der Entnahmeeinheit arretierbar ist, wenn Dichtmittelbehälter und Entnahmeeinheit verbunden werden, und nur durch das Aufbringen großer Kräfte wieder lösbar ist.

Der Erfindung liegt die Aufgabe zugrunde, eine weiter vereinfachte Vorrichtung zum Abdichten aufblasbarer Gegenstände, insbesondere Reifen, bereitzustellen, welche ein unbeabsichtigtes Lösen der Verbindung zwischen druckbelastetem Dichtmittelbehälter und Ventil- und Verteilereinheit verhindert, wobei eine Fehlbedienung weitestgehend verhindert wird, und die dabei einfach zu bedienen und kostengünstig herzustellen ist.

Gelöst wird diese Aufgabe durch die Merkmale des Hauptanspruchs. Vorteilhafte Weiterbildungen sind in den Unteransprüchen enthalten.

Auch hierbei sind zunächst die Arretiermittel so ausgebildet, dass die Kraft zum Lösen des Dichtmittelbehälters von der Ventil- und Verteilereinheit größer ist als die Kraft zum Verbinden des Dichtmittelbehälters mit der Ventil- und Verteilereinheit. Durch eine solche Ausbildung ist ein versehentlichen Lösen ausgeschlossen und der Nutzer bemerkt sofort anhand des unterschiedlichen Aufwandes zur Beeinflussung der Verbindung, dass hier auch unterschiedliche Effekte erzielt werden. Dabei können die Arretiermittel auch so gestaltet sein, dass die Kraft zum Lösen der Verbindung nur mittels eines zusätzlichen Werkzeugs aufgebracht werden kann, was die Wirkung auf den Nutzer noch erhöht.

Die lösbare Verbindung zwischen Dichtmittelbehälter und Ventil- und Verteilereinheit als Schraubverbindung und die Arretiermittel sind als zusammenwirkende Verzahnung oder zusammenwirkende Rasten ausgebildet und im Bereich des Anschlußstutzens und im Bereich des Aufnahmestutzens angeordnet. Dabei sind die Verzahnung oder Rasten mindestens teilweise federnd und/oder flexibel ausgebildet. Die Arretiermittel sind zudem so ausgebildet, dass mindestens eines der Arretiermittel zerstört werden muß, um den Dichtmittelbehälter von der Ventil- und Verteilereinheit zu lösen.

Eine besonders vorteilhafte Ausbildung besteht darin, dass zur lösbaren Verbindung zwischen Dichtmittelbehälter und Ventil- und Verteilereinheit der Dichtmittelbehälter einen zylindrischen Anschlußstutzen und die Ventil- und Verteilereinheit einem zylindrischen Aufnahmestutzen aufweisen, wobei die Arretiermittel zusammenwirkend ausgebildet und im Bereich des Anschlußstutzens und im Bereich des Aufnahmestutzens angeordnet sind, und bei der das Drehmoment zum Lösen des Dichtmittelbehälters von der Ventil- und Verteilereinheit größer ist als das Drehmoment zum Verbinden des Dichtmittelbehälters mit der Ventil- und Verteilereinheit. Drehbewegungen sind einfach durchzuführen und die Momentenänderung ist für einen Nutzer sehr gut spürbar, wobei hier der Dichtmittelbehälter auf einfache Weise als Flasche mit einem als zylindrischen Anschlußstutzen ausgebildeten Flaschenhals ausgeführt sein kann.

Eine weitere vorteilhafte Ausbildung besteht darin, dass die Arretiermittel so ausgebildet sind, dass mindestens eines der Arretiermittel zerstört werden muß, um den Dichtmittelbehälter von der Ventil- und Verteilereinheit zu lösen. Hierdurch wird eine stark unterschiedliche Ausbildung der Kraft oder des Momentes erreicht, das jeweils zum Verbinden oder zum Lösen erforderlich ist. Im Extrem kann auch hier ein besonderes Werkzeug erforderlich sein um die zur Zerstörung eines Arretiermittels erforderliche Kraft aufzubringen, während das Verbinden von Dichtmittelbehälter und Ventil- und Verteilereinheit manuell geschehen kann.

Eine weitere vorteilhafte Ausbildung besteht darin, dass die lösbare Verbindung zwischen Dichtmittelbehälter und Ventil- und Verteilereinheit als Schraubverbindung ausgebildet ist. Eine solche Ausbildung, bei der eine rotatorische Bewegung in eine translatorische umgesetzt wird, erlaubt größere Variationen bei der Konstruktion. So können die erforderliche Arretiermittel in mehreren Richtungen wirkend angeordnet werden, nämlich entweder in Umfangsrichtung oder in einer zur Schraubenachse parallelen Richtung, oder auch in zwischenliegenden "schrägen" Richtungen, dies natürlich auch additiv.

Eine weitere vorteilhafte Ausbildung besteht darin, dass die Arretiermittel als zusammenwirkende Verzahnung oder zusammenwirkende Rasten ausgebildet und im Bereich des Anschlußstutzens und im Bereich des Aufnahmestutzens angeordnet sind. Hierdurch ergibt sich eine einfache Herstellung und insbesondere im Zusammenwirken mit einer Schraubverbindung auch eine raumsparende Konstruktion, da die Arretierelemente in den oder anschließend an die Gewindebereiche von Mutter- und Vaterende plaziert werden können.

Eine weitere vorteilhafte Ausbildung besteht darin, dass die Verzahnung oder Rasten mindestens teilweise federnd ausgebildet sind. Dabei kann durch Voreinstellung der Federkraft über Geometrie- und/oder Werkstoffausbildungen eine Anpassung der Kräfte oder Momente sehr einfach vorgenommen werden.

Anhand eines Ausführungsbeispieles soll die Erfindung näher erläutert werden. Es zeigen
- Fig. 1: eine Vorrichtung zum Abdichten aufblasbarer Gegenstände,
- Fig. 2: ein Ausführungsbeispiel, bei dem Kraft zum Lösen des Dichtmittelbehälters von der Ventil- und Verteilereinheit größer ist als die Kraft zum Verbinden,
- Fig. 3: ein weiteres Ausführungsbeispiel

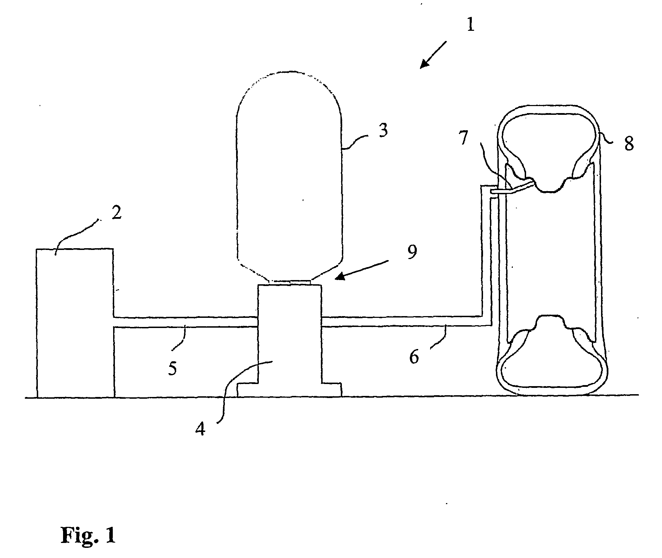

Die Fig. 1 zeigt eine Vorrichtung 1 zum Abdichten aufblasbarer Gegenstände, insbesondere Reifen, in schematischer Darstellung. Die Vorrichtung enthält eine Gasdruckquelle in Form eines Kompressors 2 und einen Dichtmittelbehälter 3, der mit einer Entnahmeeinheit 4 verbunden ist und auf dem Kopf steht. Der Kompressor 2 ist über eine erste Druckluftleitung 5 mit einer (nicht gezeigten) Einlassleitung der Ventil- und Verteilereinheit 4 verbunden und eine (ebenfalls nicht gezeigte) Auslassleitung der Ventil-und Verteilereinheit 4 ist über eine zweite Druckluftleitung 6 mit dem Ventil 7 eines Reifens 8 verbunden. Mit Hilfe des Kompressors 2 kann über die Druckluftleitung 6, die Ventil- und Verteilereinheit 4, den Innenraum des Dichtmittelbehälters 3, die Druckluftleitung 6 und das Ventil 7 zum Abdichten eines beschädigten Reifens 8 sowohl Druckluft als auch Dichtmittel in an sich bekannter Art und Weise in diesen überführt werden.

Der Dichtlnittelbehälter 3 und die Ventil- und Verteilereinheit 4 sind mit Arretiermitteln versehen sind, welche ein unbeabsichtigtes Lösen des Dichtmittelbehälters 3 von der Ventil- und Verteilereinheit 4 verhindern. In den folgenden Figuren wird ausgeführt, wie die Arretiermittel im Einzelnen ausgeführt werden können.

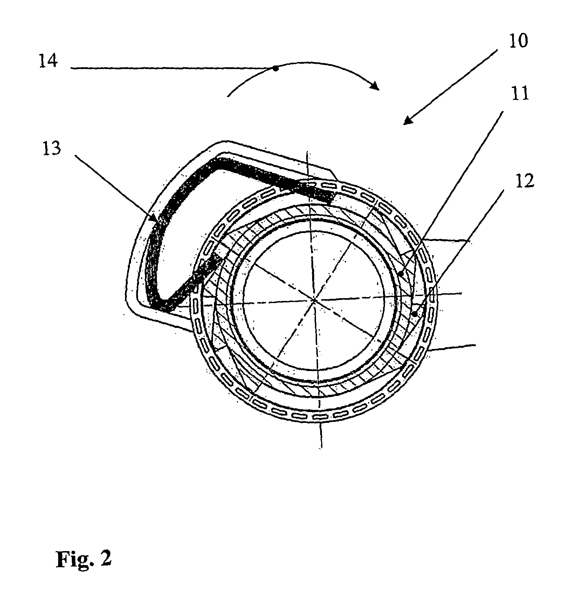

Die Fig. 2 zeigt ein Ausführungsbeispiel, bei dem im Verbindungsbereich 9 der Dichtmittelbehälter 3 einen zylindrischen Anschlußstutzen und die Ventil- und Verteilereinheit einem zylindrischen Aufnahmestutzen aufweisen, und bei dem die Arretiermittel im Bereich des Anschlußstutzens und im Bereich des Aufnahmestutzens angeordnet sind.

Die lösbare Verbindung im Verbindungsbereich 9 zwischen Dichtmittelbehälter 3 und Ventil- und Verteilereinheit 4 ist hier als Schraubverbindung 10 ausgebildet. Die zusammenwirkenden Arretiermittel auf der Seite des zum Dichtmittelbehälter 3 gehörigen drehbaren zylindrischen Anschlußstutzens 11 sind als eingeformte Verzahnung 12 ausgebildet. Im Bereich des Aufnahmestutzens an der Ventil- und Verteilereinheit ist als Arretiermittel ein Federbügel 13 angeordnet, der mit der Verzahnung einrastend zusammenwirkt. In Drehrichtung 14 kann dann der Dichtmittelbehälter 3 auf die Ventil-und Verteilereinheit 4 bis zum Anschlag aufgeschraubt werden, wonach ein Zurückdrehen nur mit einem hohen Drehmoment unter Abquetschen / Abreißen der Verzahnung 12 oder durch Zerstörung der Federhalterung möglich ist.

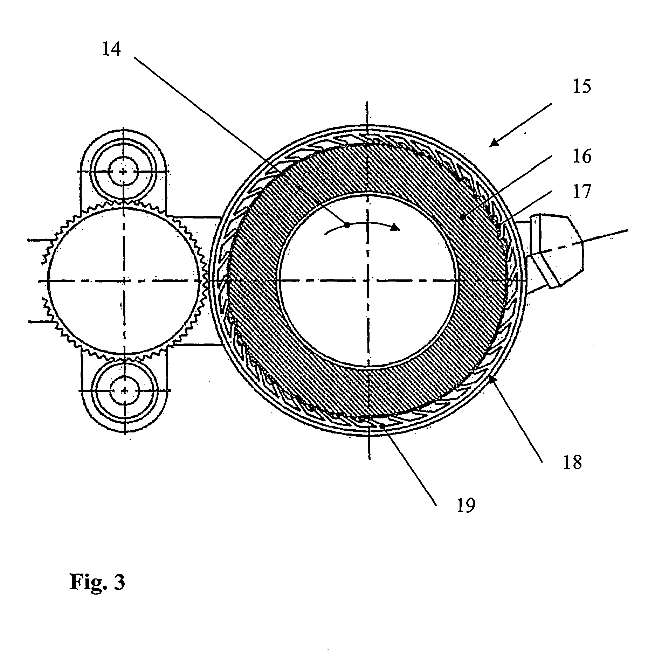

Die Fig. 3 zeigt ein Ausführungsbeispiel, bei dem im Verbindungsbereich 9 der Dichtmittelbehälter 3 ebenfalls einen zylindrischen Anschlußstutzen und die Ventil- und Verteilereinheit einem zylindrischen Aufnahmestutzen aufweisen, bei dem die Arretiermittel im Bereich des Anschlußstutzens und im Bereich des Aufnahmestutzens angeordnet sind, und bei dem die lösbare Verbindung im Verbindungsbereich 9 zwischen Dichtmittelbehälter 3 und Ventil- und Verteilereinheit 4 als Schraubverbindung 15 ausgebildet ist.

Das zusammenwirkende Arretiermittel auf der Seite des zum Dichtmittelbehälter 3 gehörigen drehbaren zylindrischen Anschlußstutzens 16 ist als angeformte flexible und bereichsweise über den Umfang angeordnete Außenverzahnung 17 ausgebildet.

Im Bereich des Aufnahmestutzens 18 an der Ventil- und Verteilereinheit ist als Arretiermittel eine angeformte flexible und über den gesamten Umfang angeordnete Innenverzahnung 19 ausgebildet, die mit der Außenverzahnung 17 über jeweils Teilbereiche einrastend zusammenwirkt. Wird der drehbare Anschlußstutzens 16 in Drehrichtung 14 bewegt, kann dann der Dichtmittelbehälter 3 auf die Ventil- und Verteilereinheit 4 bis zum Anschlag aufgeschraubt werden, wonach ein Zurückdrehen nur mit höherem Drehmoment unter flexibler Verformung oder Zerstörung der Verzahnungen 17 und 19 möglich ist.

Hierdurch ergibt sich eine einfache Herstellung und insbesondere im Zusammenwirken mit einer Schraubverbindung auch eine raumsparende Konstruktion, da die Arretierelemente in den oder anschließend an die Gewindebereiche angeordnet sind.

### Bezugszeichenliste

### (Teil der Beschreibung)

- 1: Vorrichtung zum Abdichten
- 2: Kompressor
- 3: Dichtmittelbehälter
- 4: Ventil- und Verteilereinheit
- 5: Druckluftleitung
- 6: Druckluftleitung
- 7: Ventil
- 8: Reifen
- 9: Verbindungsbereich
- 10: Schraubverbindung
- 11: Anschlußstutzen
- 12: Verzahnung
- 13: Federbügel
- 14: Drehrichtung
- 15: Schraubverbindung
- 16: Anschlußstutzen
- 17: Außenverzahnung
- 18: Aufnahmestutzen
- 19: Innenverzahnung

## Patentansprüche

1. Vorrichtung zum Abdichten und Aufpumpen aufblasbarer Gegenstände, insbesondere zum Abdichten und Aufpumpen von Kraftfahrzeugreifen, wobei die Vorrichtung eine Druckgasquelle, einen Behälter (3) für ein in den aufblasbaren Gegenstand einfüllbares selbsttätiges Dichtmittel, eine Ventil- und Verteilereinheit (4) für Dichtmittel und Druckgas mit einer an die Druckgasquelle anschließbaren Einlaßleitung und einer an den Aufblasbaren Gegenstand anschließbaren Auslaßleitung, Verbindungsmittel zwischen Ventil- und Verteilereinheit (4) und aufblasbarem Gegenstand, ggf. Verbindungsmittel zur Energiezufuhr sowie Schalt-, und/oder Steuer- und Anzeigeeinrichtungen für den Betrieb der Vorrichtung beinhaltet, wobei der Dichtmittelbehälter (3) mit der Ventil- und Verteilereinheit (4) lösbar verbunden ist und der Dichtmittelbehälter (3) und die Ventil- und Verteilereinheit (4) mit Arretiermitteln (12;13;17;19) versehen sind, welche ein unbeabsichtigtes Lösen des Dichtmittelbehälters (3) von der Ventil- und Verteilereinheit (4) verhindern, wobei die Arretiermittel so ausgebildet sind, dass die Kraft zum Lösen des Dichtmittelbehälters (3) von der Ventil- und Verteilereinheit (4) größer ist als die Kraft zum Verbinden des Dichtmittelbehälters (3) mit der Ventil- und Verteilereinheit (4), die lösbare Verbindung zwischen Dichtmittelbehälter und Ventil- und Verteilereinheit ist als Schraubverbindung (15) ausgeführt **dadurch gekennzeichnet, dass** die Arretiermittel als zusammenwirkende Verzahnung (17;19) oder zusammenwirkende Rasten (12;13) ausgebildet und im Bereich des Anschlußstutzens (16) und im Bereich des Aufnahmestutzens (18) angeordnet sind, wobei die Verzahnung oder Rasten (12;13;17;19) mindestens teilweise federnd und/oder flexibel ausgebildet sind, und wobei die Arretiermittel so ausgebildet sind, dass mindestens eines der Arretiermittel zerstört werden muß, um den Dichtmittelbehälter (3) von der Ventil- und Verteilereinheit (4) zu lösen.

2. Vorrichtung nach Anspruch 1, bei der zur lösbaren Verbindung zwischen Dichtmittelbehälter (3) und Ventil- und Verteilereinheit (4) der Dichtmittelbehälter einen zylindrischen Anschlußstutzen (16) und die Ventil- und Verteilereinheit (4) einem zylindrischen Aufnahmestutzen (18) aufweisen, wobei die Arretiermittel zusammenwirkend ausgebildet und im Bereich des Anschlußstutzens und im Bereich des Aufnahmestutzens angeordnet sind, und bei der das Drehmoment zum Lösen des Dichtmittelbehälters (3) von der Ventil- und Verteilereinheit (4) größer ist als das Drehmoment zum Verbinden des Dichtmittelbehälters (3) mit der Ventil- und Verteilereinheit (4).

## Claims

1. Device for sealing and inflating inflatable objects, in particular for sealing and inflating motor vehicle tyres, wherein the device includes a pressurized gas source, a container (3) for an automatic sealing medium which can be poured into the inflatable object, a valve and distributor unit (4) for the sealing medium and pressurized gas with an inlet line which can be connected to the pressurized gas source and an outlet line which can be connected to the inflatable object, connecting means between the valve and distributor unit (4) and the inflatable object, if appropriate connecting means for supplying energy, and switching and/or control and display devices for operating the device, wherein the sealing medium container (3) is detachably connected to the valve and distributor unit (4), and the sealing medium container (3) and the valve and distributor unit (4) are provided with locking means (12; 13; 17; 19) which prevent unintentional release of the sealing medium container (3) from the valve and distributor unit (4), wherein the locking means are embodied in such a way that the force for releasing the sealing medium container (3) from the valve and distributor unit (4) is greater than the force for connecting the sealing medium container (3) to the valve and distributor unit (4), and the releasable connection between the sealing medium container and the valve and distributor unit (4) is embodied as a screwed connection (15), **characterized in that** the locking means are embodied as an interacting toothing (17; 19) or as interacting ratchets (12; 13), and are arranged in the region of the male connector (16) and in the region of the female connector (18), wherein when the toothing or ratchets (12; 13; 17; 19) are embodied in an at least partially sprung fashion and/or flexible fashion, and wherein the locking means are embodied in such a way that at least one of the locking means has to be destroyed in order to release the pressure medium container (3) from the valve and distributor unit (4).

2. Device according to Claim 1, in which, in order to form a releasable connection between the pressure medium container (3) and valve and distributor unit (4), the pressure medium container has a cylindrical male connector (16), and the valve and distributor unit (4) has a cylindrical female connector (18), wherein the locking means are embodied in an interacting fashion and are arranged in the region of the male connector and in the region of the female connector, and in which the torque for releasing the pressure medium container (3) from the valve and distributor unit (4) is greater than the torque for connecting the pressure medium container (3) to the valve and distributor unit (4).

## Revendications

1. Dispositif pour assurer l'étanchéité et le gonflage d'objets gonflables, en particulier pour assurer l'étanchéité et le gonflage de bandages de roue de véhicules automobiles, le dispositif présentant :
une source de gaz sous pression, un récipient (3) pour un agent d'étanchéité automatique qui peut être injecté dans l'objet gonflable,
une unité (4) de soupape et de répartition de l'agent d'étanchéité et du gaz sous pression dotée d'un conduit d'entrée qui peut être raccordé à la source de gaz sous pression et d'un conduit de sortie qui peut être raccordé à l'objet gonflable,
un moyen de liaison entre l'unité (4) de soupape de répartition et l'objet gonflable,
éventuellement un moyen de liaison qui permet un apport d'énergie et des dispositifs de commutation et/ou de commande et d'affichage qui permettent d'utiliser le dispositif,
le récipient (3) d'agent sous pression étant relié de manière libérable à l'unité (4) de soupape et de répartition et le récipient (3) d'agent d'étanchéité et l'unité (4) de soupape et de répartition étant dotés de moyens de blocage (12; 13; 17; 19) qui empêchent une libération intempestive du récipient (3) d'agent d'étanchéité par rapport à l'unité (4) de soupape de répartition,
les moyens de blocage étant configurés de telle sorte que la force nécessaire pour libérer le récipient (3) d'agent d'étanchéité de l'unité (4) de soupape et de répartition est supérieure à la force nécessaire pour relier le récipient (3) d'agent d'étanchéité et l'unité (4) de soupape et de répartition,
la liaison libérable entre le récipient d'agent d'étanchéité et l'unité de soupape et de répartition étant configurée comme liaison filetée (15), **caractérisé en ce que**
les moyens de blocage sont configurés comme denture coopérante (17; 19) ou encliquetages coopérants (12; 13) et sont disposés dans la zone de la tubulure de raccordement (16) et dans la zone de la tubulure de réception (18),
**en ce que** la denture ou les encliquetages (12; 13; 17; 19) sont au moins en partie élastiques et/ou flexibles et
**en ce que** les moyens de blocage sont configurés de telle sorte qu'au moins un des moyens de blocage doit être rompu pour libérer le récipient (3) d'agent d'étanchéité de l'unité (4) de soupape et de répartition.

2. Dispositif selon la revendication 1, dans lequel pour assurer la liaison libérable entre le récipient (3) d'agent d'étanchéité et l'unité (4) de soupape de répartition, le récipient d'agent d'étanchéité présente une tubulure cylindrique de raccordement (16) et l'unité (4) de soupape et de répartition présente une tubulure cylindrique de réception (18), les moyens de blocage étant configurés de manière à coopérer et disposés dans la zone de la tubulure de raccordement et dans la zone de la tubulure de réception, et dans lequel le couple de rotation nécessaire pour libérer le récipient (3) d'agent d'étanchéité de l'unité (4) de soupape et de répartition est supérieur au couple de rotation nécessaire pour relier le récipient (3) d'agent d'étanchéité à l'unité (4) de soupape et de répartition.
